# EUROPEAN PATENT SPECIFICATION

(11) **EP 1 531 308 B1**
(45) Date of publication and mention of the grant of the patent: **14.02.2007**
(21) Application number: 04397021.9
(22) Date of filing: 12.11.2004
(51) Int. Cl.: F24F 13/24, F16L 55/027, F16L 55/033

(54) **Silencer for a ventilation duct**
Schalldämpfer für einen Belüftungskanal
Silencieux pour un conduit de ventilation

(30) Priority: 12.11.2003 FI 20035204
(43) Date of publication of application: 18.05.2005
(73) Proprietor: Tarpio, Tapio, 12380 Leppäkoski (FI)
(72) Inventor: Tarpio, Tapio, 12380 Leppäkoski (FI)
(74) Representative: Pursiainen, Timo Pekka

(56) References cited:
- EP-A- 1 063 479
- WO-A-91/14138
- DE-A1- 4 311 334
- DE-U1- 29 609 785
- FI-A- 823 060
- GB-A- 984 817

## Description

The present invention relates to a sound trap which is arranged to be installed in a ventilation duct and which sound trap comprises a housing, a sound attenuating piece made of a sound absorbing material, at least one inlet for conveying air into the sound trap, at least one outlet for leading air out of the sound trap, at least one flow channel for conveying air from said at least one inlet to said at least one outlet, and said sound attenuating piece is placed between the inlet and the outlet to block the direct air flow from the inlet to the outlet, wherein air circumvents the sound attenuating piece at least partly, and said at least one flow channel is formed in the volume defined by the sound attenuating piece and the housing and the sound trap also comprises at least one flow control means for adjusting the air flow in the flow channel.

It is known to install sound traps in a system of ventilation ducts to prevent the propagation of acoustic interference in the ventilation duct system. In particular, such sound traps are commonly used in connection with heat recovery systems, because such heat recovery devices, as such, cause noise which propagates easily via ventilation ducts into rooms. For example, German application publication DE-2701830 presents an arrangement for providing noise suppression in air and gas flow channels. This arrangement comprises a sound trap which is intended to be placed in the flow channel. The sound trap comprises an expansion part lined with a sound absorbing material. The design of this sound absorbing material is implemented in such a way that in one cross-sectional direction, a narrower part is formed in the air flow channel, wherein the sound absorbing material provides noise suppression to some extent. To keep the cross-sectional area of the air flow substantially constant within the sound trap, the sound absorbing material is shaped so that seen in another cross-sectional direction of the sound trap, perpendicular to the aforementioned direction, the flow channel is provided with a widening around the midpoint of the sound trap. However, such an arrangement is not very efficient in suppressing all acoustic interference. Furthermore, the arrangement is relatively complex and requires the use of a structure which is difficult to shape.

Finnish patent application FI-823060 presents a sound attenuating device which is to be installed as a part of a ventilation duct and whose walls limiting the air channels are constructed of massive multilayer acoustic panels. These acoustic panels are oriented so that sounds reflected from the acoustic panels are directed to other acoustic panels, thereby tending to be suppressed.

Publication GB 984817 presents a sound attenuating piece for air flows, the sound attenuating piece comprising a silencer placed in the central part of the channel, wherein the air flow is directed along the sides of this silencer. The sound attenuating piece is coated with a perforated sheet.

The publication WO 91/14138 A discloses a sound trap comprising a noise absorbing silencer positioned inside the casing. This noise absorbing silencer affects that the incoming air has to circumvent the noise absorbing silencer. The sound trap further comprises adjusting means for positioning the noise absorbing silencer with a suitable distance from the end wall of the casing. In another embodiment there is a tube in connection with the duct from which input gas flows into the sound trap. The distance of the tube from the noise absorbing silencer can be adjusted. Both of the above embodiments have the common feature that the distance between the noise absorbing silencer and the point from where the input gas enters the casing can be adjusted thus affecting the inner flow resistance of the casing.

It is an aim of the present invention to improve the prior art and to provide an improved sound trap. The invention is based on the idea of providing the sound trap with at least one flow control means so that the air flow in the flow channel can be controlled by the control means by changing the position of the flow means in relation to the inlet and/or the outlet. To put it more precisely, the sound trap according to the present invention is primarily characterized in that said at least one flow control means comprises a sheet connected to the housing or the cover element of the housing, and positioned between the sound attenuating piece and the air inlet and/or the air outlet.

The present invention shows remarkable advantages over solutions of prior art. The sound trap according to the invention is relatively simple and inexpensive to manufacture. Moreover, the sound trap can be easily installed in a ventilation duct system, wherein the sound trap can also be placed in connection with existing ventilation ducts. Furthermore, savings are achieved in the installation costs when compared with arrangements applying sound traps of prior art. Also, the sound trap according to the invention does not substantially reduce the cross-sectional area of the air flow channels, wherein the sound trap does not significantly increase the air flow resistance in the ventilation ducts. In spite of this, the sound trap according to the invention provides effective sound attenuation, thereby reducing the access of acoustic interference into the rooms via the ventilation ducts. The sound trap according to the invention can be used to control the air flow by setting the flow control means in a desired position. This setting can be performed easily by changing the position of the cover element in relation to the housing. The cover element is fixed in the desired position with e.g. a butterfly nut or another suitable fixing means. The cover element can be equipped with a scale by which the cover part can be easily fixed in a position to provide the desired flow control.

In the following, the present invention will be described in more detail with reference to the appended drawings, in which
- Fig. 1: shows the sound trap according to one advantageous embodiment in a reduced manner, seen in a first direction and with the cover opened,
- Fig 2a: shows a sound trap according to Fig. 1 in a reduced cross-sectional view in a second direction,
- Fig. 2b: shows the cover element of the sound trap according to Fig. 1 in a top view,
- Figs. 3a-3c: show some embodiments of sound attenuating pieces suitable for the sound trap according to Fig. 1,
- Fig. 4: shows the sound trap according to one advantageous embodiment in a reduced manner, seen in a first direction and with the cover opened,
- Fig 5a: shows the sound trap of Fig. 4 seen in a second direction, in a reduced cross sectional view,
- Fig. 5b: shows a variant of the sound trap of Fig. 4 seen in the second direction, in a reduced cross sectional view,
- Fig. 5c: shows the sound trap of Fig. 5b seen in the direction of the cover element,
- Fig. 6: shows a third advantageous embodiment in a top view, with the cover opened,
- Fig. 7: shows an alternative cover arrangement in a reduced cross-sectional view,
- Fig. 8: shows a fourth advantageous sound trap structure in a reduced cross-sectional view from above, and
- Fig. 9: is a reduced view of an alternative sound attenuating piece installed in the sound trap according to Fig. 1.
- Fig. 10: shows yet a fifth advantageous sound trap structure in a reduced cross-sectional view from above.

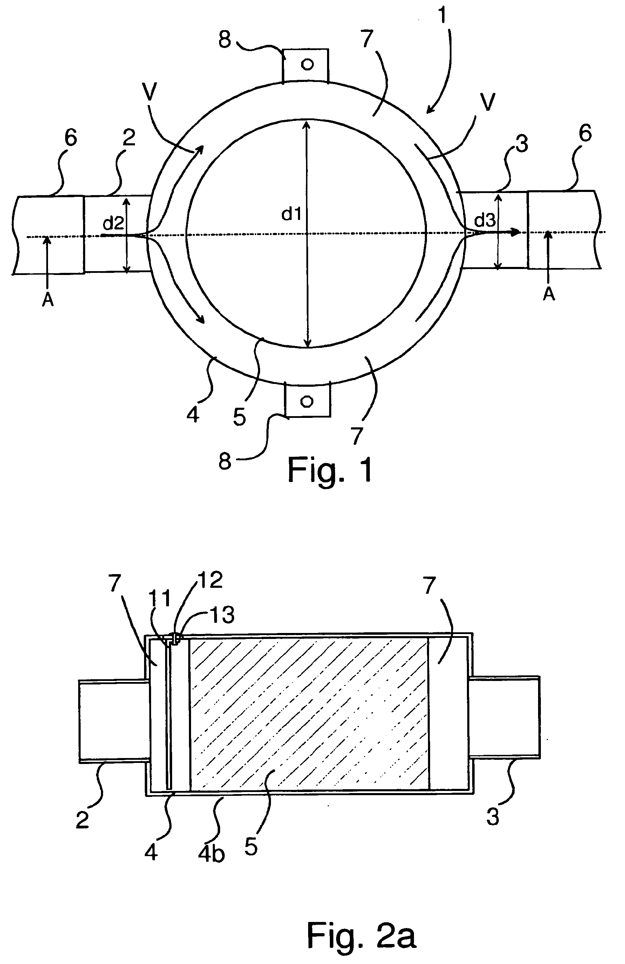

In the following, the sound trap 1 according to the first advantageous embodiment of the invention will be described with reference to Figs. 1, 2a, 2b, 3a, and 3b. Figure 1 shows the structure of the sound trap in a perspective view from above. The sound trap 1 comprises an inlet 2, an outlet 3, and a housing 4. A sound attenuating piece 5 is placed inside the housing 4, which piece is made of a suitable sound absorbing material, such as felt, mineral wool, or the like. Seen from above, the cross-sectional shape of the sound attenuating piece 5 is substantially the same as the cross-sectional shape of the housing 4 of the sound trap from above. In the example of Fig. 1, this cross-sectional shape is substantially circular, but the invention is not limited to such cross-sectional shapes only. The sound attenuating piece 5 is placed inside the housing 4 to block a direct air flow from the inlet 2 to the outlet 3. The air flow is illustrated with arrows V in Fig. 1. In an advantageous embodiment, the centre of the sound attenuating piece 5 is located substantially in the centre of the housing 4. Thus, an air flow channel is formed between the outer edge of the sound attenuating piece 5 and the inner edge of the housing 4, the cross-sectional area of the channel being substantially constant in the whole inner volume of the sound trap 1 in this embodiment.

Figure 2a shows the sound trap of Fig. 1 in a cross sectional view from the side. Here it is seen that the sound attenuating piece 5 is preferably dimensioned so that the air flow via the upper and lower edges of the housing 4 is blocked. In other words, the sound attenuating piece 5 extends substantially to the inner height of the housing 4 in this height direction. On the other hand, the sound attenuating piece 5 is made of a material that is flexible to some extent, wherein the sound attenuating piece 5 may be slightly higher than the inner height of the housing 4.

From the cross-section of Fig. 2a, it is also seen that at least one flow control means 11 is placed in the inner volume of the sound trap 1, namely in the flow channel 7. The fixing of this flow control means 11 in connection with the housing 4 of the sound trap 1 is preferably arranged so that the position of the flow control means 11 in relation to the inlet 2 is changeable, wherein the flow strength can be affected by changing the position. This is based on e.g. the fact that the flow control means 11 generates a change in the cross-sectional area of the flow channel, wherein by varying this cross-sectional area, the flow is subjected to a different flow resistance. In the embodiment of Fig. 2a, the control is effected by changing the mounting point of the flow control means 11 by moving a means 12 for mounting the control flow means 11 in a groove 13 made in the housing 4 either closer to or farther away from the inlet 2, wherein the cross-sectional area of the flow channel is reduced (the flow resistance is increased) or increased (the flow resistance is reduced), respectively. Nevertheless, it is obvious that the flow control means 11 of the sound trap according to the present invention can also be fixed to a given point in a stationary manner, without a possibility for adjustment. This may be advantageous e.g. when it is possible to calculate the correct setting value in advance and to install the flow control means 11 in the location complying with this setting value in relation to the inlet 2 and/or outlet 3 already at the manufacturing stage.

Furthermore, Fig. 2a shows the sound trap 1 in a top view, wherein an advantageous form of the groove 13 is visible. In this embodiment, the number of the grooves 13 is more than one, but in some embodiments, a single groove 13 will be sufficient. Instead of the groove, there may naturally be e.g. a hole, wherein the adjustment possibility can be provided in the flow control means 11. Moreover, the groove shape is not necessary for the mounting if there is no need for adjusting the flow control means 11. Furthermore, it is obvious that the adjustment can be provided by means of several mounting holes, wherein one of these mounting points is selected as the mounting point. In this alternative, there is no possibility of stepless adjustment, but the adjustment is selected between two or more alternative positions.

We shall next discuss the operation of the sound trap 1. The sound trap 1 is placed in a ventilation duct 6 so that the supply air flow of the ventilation duct 6 is led via the inlet 2 to the sound trap 1. In a corresponding manner, the outlet 3 of the sound trap is connected to the ventilation duct 6 to conduct air forward in the ventilation duct 6. The air coming in via the inlet 2 flows into the inner volume of the housing 4, and the flow control means 11 directs the flow through the flow channel formed between the side wall of the housing 4 and the flow control means 11. Further, the sound attenuating piece 5 makes the air flow spread in the flow channel 7 formed between the sound attenuating piece 5 and the inner edges of the housing 4. Because the cross-section of the flow channel 7 is substantially constant except for the point where the cross-sectional area is limited by the flow control means 11, the air flow rate remains normally constant in the whole channel. Furthermore, because of the symmetry, the air flow is spread primarily evenly into two air flows to circle the inner edges of the housing 4. The air flows join at the outlet 3 and enter the flow channel 6 via the outlet 3.

As stated above and as can be seen particularly in Fig. 1, the sound trap of this embodiment comprises two flow paths from the inlet 2 into the outlet 3. These flow paths are dimensioned preferably so that their combined cross-sectional area is substantially the same as or greater than the cross-sectional area of the ventilation duct 6. Thus, the flow rate in the flow channel 7 formed in the sound trap 1 is not significantly increased when compared with the air flow rate in the ventilation duct 6. In some embodiments, the air flow rate in the sound trap 1 may be even lower than the air flow rate in the ventilation duct 6.

Even though the sound trap 1 does not have a significant resisting effect on the air flow in the ventilation duct 6, the sound trap 1 absorbs considerably extraneous noise coming in via the ventilation duct 6. This is due e.g. to the fact that in the inner volume of the sound trap 1, the acoustic waves entering the inlet 2 via the ventilation duct 6 impact on the sound attenuator 5 which does not significantly reflect the acoustic waves, wherein the acoustic waves are suppressed in the sound attenuating piece 5. In this way, the acoustic waves cannot propagate directly from the inlet 2 to the outlet 3.

The sound absorbing capacity of the sound trap 1 can still be improved to some extent by coating the inner surface of the housing 4 with a sound absorbing layer. Thus acoustic waves which are possibly reflected from the sound attenuating piece 5 are suppressed even more by this inner coating. However, it has been found that the sound trap 1 according to the invention is very effective even without such an additional absorbing layer provided on the inner surface of the housing 4. Furthermore, the flow control means 11 can be coated with an absorbent material, or the flow control means 11 can be made of a perforated sheet or the like. The perforation may slightly dissipate the air flow, but it may also slightly improve the sound attenuation.

The suppression of acoustic interference possibly entered by conduction via the ventilation duct 5 is effective in the sound trap 1 e.g. for the reason that the sound trap 1 is fixed relatively firmly in the structures of the ceiling, wherein the sound trap 1 itself does not conduct sounds, for example via the housing 4, via the inlet 3 further into the ventilation duct.

To install the sound trap 1 in, for example, a suspended ceiling, for example mounting lugs 8 or the like are provided outside the housing 4 of the sound trap, to perform the ceiling with e.g. screws or corresponding mounting means. The sound attenuating piece 5 is fixed to the cover element 4a of the housing e.g. in such a way that the sound trap 5 and the cover element 4a can be detached as an integrated unit from the housing 4. Thus, when the sound attenuating piece 5 and the cover 4a of the housing are detached from the sound trap 1, it is possible to take cleaning measures, such as the cleaning of the ventilation ducts 6. The sound trap 1 is thus also used as a cleanout hole, and in this respect, a separate cleanout hole will not be needed in the ventilation ducts. The sound attenuating piece 5 does not necessarily need to be fixed to the cover element 4a but for example in such a way that the sound attenuating piece 5 is fixed to the housing 4, for example the bottom element 4b of the housing 4 (Fig. 2a). Thus, the cover element 4a is detached first, after which it is possible to open the mounting means (not shown) of the sound attenuating piece 5 and to detach the sound attenuating piece 5 from the housing 4.

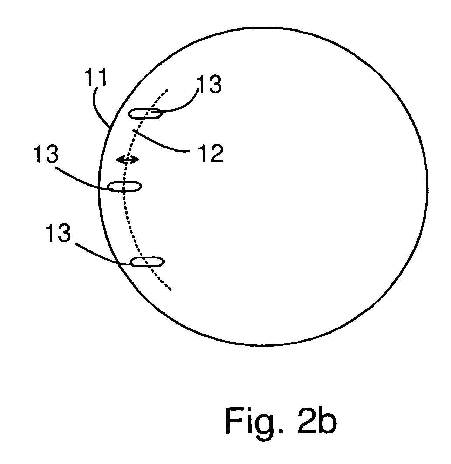

Consequently, the function of the sound attenuating piece 5 in the sound trap 1 according to the invention is to block a direct air flow from the inlet 2 to the outlet 3. Thus, in the dimensioning of the sound attenuating piece 5, one should take into account the cross-sectional size of the inlet 2 and the outlet 3 and to dimension the width of the sound attenuating piece 5 to be equal with or greater than the width of the opening of the inlet 2 or the outlet 3 in a direction substantially perpendicular to the flow direction of the air flow. For example, in the situation of Fig. 2, this dimensioning condition is met, when the diameter d1 of the sound attenuating piece 5 is greater than the diameters d2, d3 of the inlet 2 and the outlet 3, respectively.

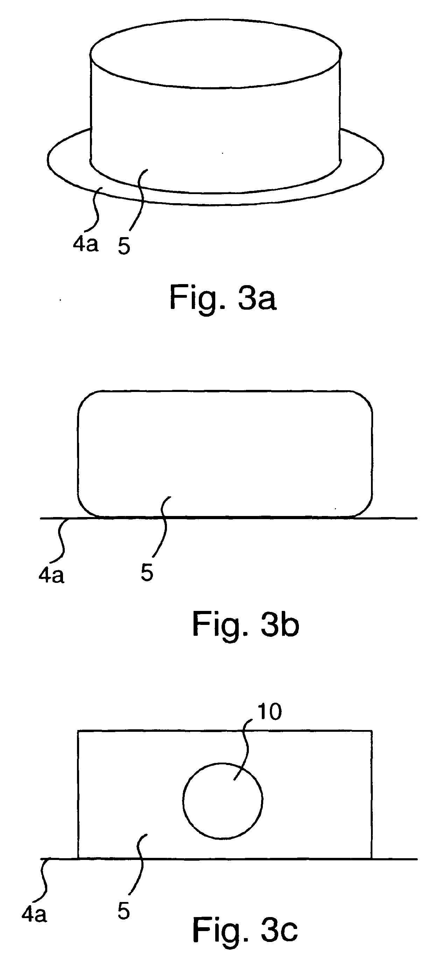

It should be mentioned that the circular shape according to the above-presented example is not necessary in connection with the housing 4 and the sound attenuating piece 5 of the sound trap 1 according to the invention. For example, the sound attenuating piece 5 can be designed to be partly tapered e.g. in the direction of the air flow; in other words, the width of the sound attenuating piece 5 in the direction of the inlet 2 and the outlet 3 is greater than the width of the sound attenuating piece 5 in the direction perpendicular to this direction. The sound attenuating piece 5 can also be shaped in the vertical direction of the housing 4, wherein it is possible, for example, to round the edges of the sound attenuating piece 5 and to arrange flow channels, for example, in the upper and lower surfaces of the sound attenuating piece 5. Some designs of the sound attenuating piece 5 are illustrated in Figs. 3a, 3b and 3c.

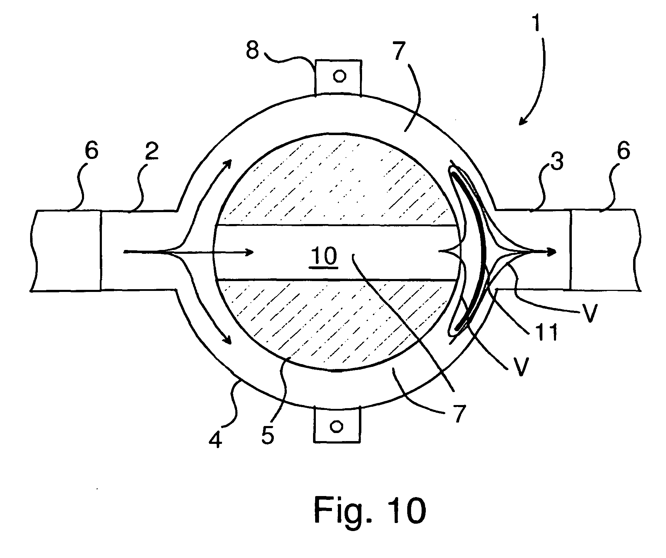

The sound attenuating piece of Fig. 3c can be used *e.g.* in the sound trap 1 of Fig. 10. Thus a part of the air flow coming in via the inlet 2 can pass through a channel 10, *e.g.* a boring, formed in the sound attenuating piece 5 to the outlet 3. However, even in this case, a part of the air flow passes through the volume formed between the sound attenuating piece 5 and the walls of the housing 4. In this embodiment, the flow control means 11 is placed in the vicinity of the outlet 3, wherein the flow coming in via the channel 10 must circumvent the flow control means 11, which is illustrated with arrows V. The flows circumventing the sound attenuating piece 5 are subjected to a reduction of the cross-sectional area of the flow channel caused by the flow control means 11 in the vicinity of the outlet 3, wherein in this embodiment, the flow is controlled e.g. by adjusting the position of the flow control means 11 in relation to the outlet 3.

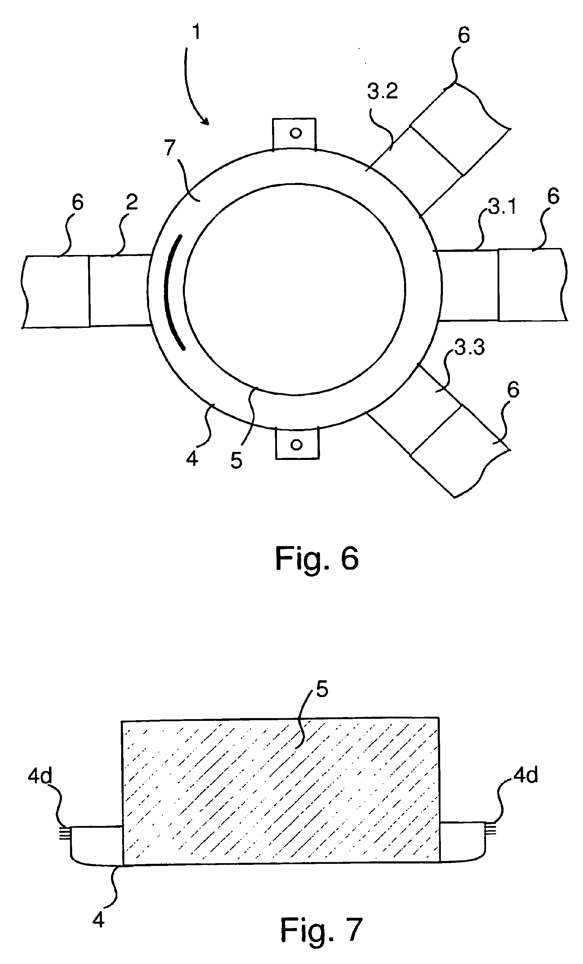

The sound trap 1 according to the invention can also be used as a branch-T, wherein the sound trap 1 comprises two or more outlets 3. For example, Fig. 6 shows such a sound trap 1 in a top view. This sound trap 1 comprises one inlet 2, from which air flows into the housing 4 of the sound trap, accommodating a sound attenuating piece 5. In the housing 4, the air flow is directed towards outlets 3.1, 3.2 and 3.3. These outlets 3.1-3.3 are, in turn, arranged in a flow passage in a ventilation duct system. According to the invention, one or more flow control means 11 can be placed in connection with the inlet 2 and/or one or more outlets 3.1-3.3. When the flow control means 11 is placed in connection with each outlet 3.1-3.3, the advantage is achieved that the flow through each outlet can be adjusted individually. Also in this structure, the sound trap 1 provides sound attenuation. Even in this alternative, the aim is to dimension the sound attenuating piece 5 in such a way that no direct flow passage is formed from the inlet into any of the outlets 3.1-3.3, wherein the air flow must pass between the wall of the housing 4 and the sound attenuating piece 5.

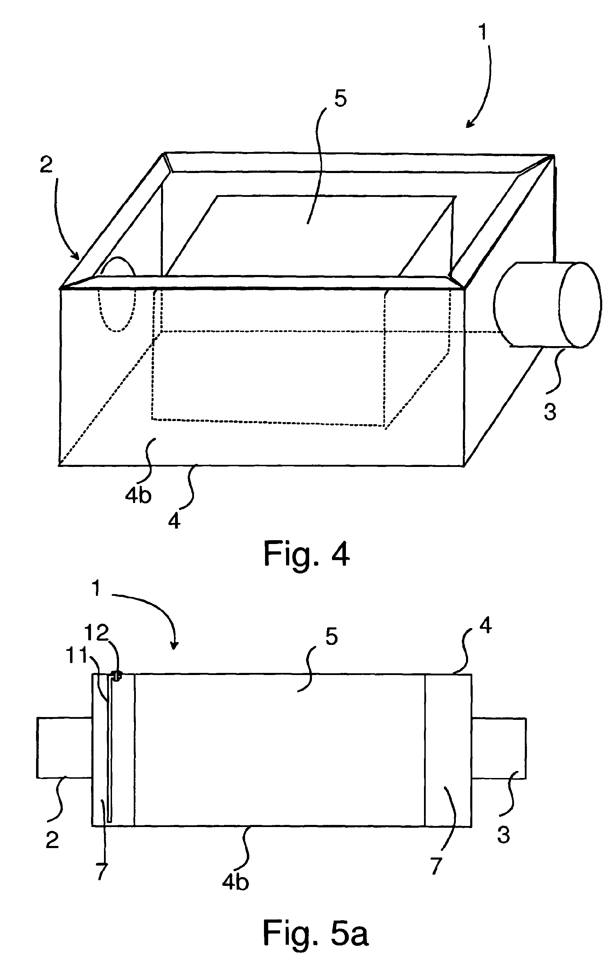

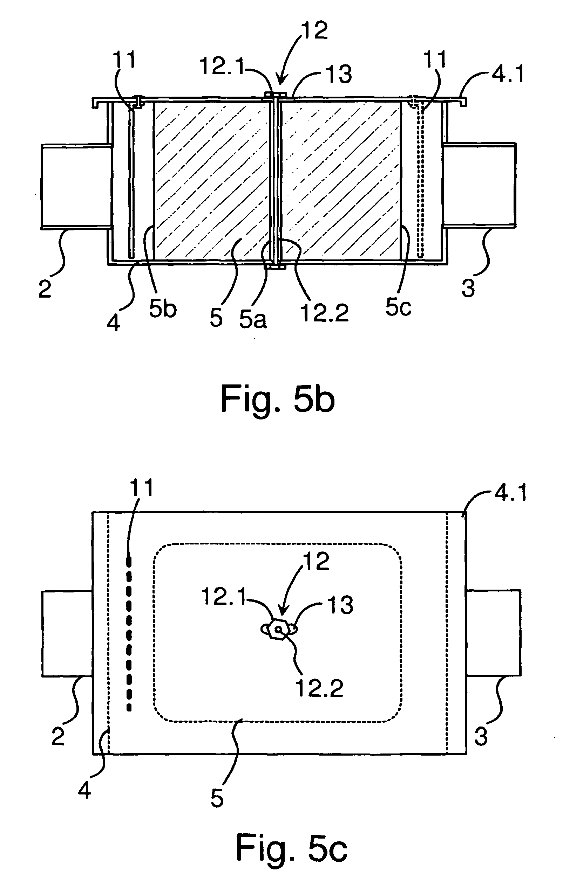

As already stated above in this description, the present invention is not limited solely to such sound traps 1, whose form is substantially circular, seen from above. Figures 4 and 5 show another advantageous sound trap 1, in which the shape of the sound trap 1 is substantially rectangular when seen from above. In this embodiment, the design of the sound attenuating piece 5 is also preferably rectangular. If necessary, the edges of the sound attenuating piece 5 can be rounded to reduce the air flow resistance inside the housing 4. Also in this arrangement, the cross-section of the air flow channel formed between the housing 4 and the sound attenuating piece 5 is substantially constant in most of the air flow channel, except for the reduction of the cross-sectional area of the flow channel by the flow control means 11. Furthermore, the cross-sectional area in the air flow channel 7 is preferably the same as or greater than the cross-sectional area of the flow opening in the inlet 2 and the outlet 3.

The sound trap 1 of Figs. 4 and 5 can be made of for example a metal sheet by bending. The housing is preferably made of two pieces with a substantially identical shape. The edges of the housing pieces are bevelled, and the pieces are connected at two edges for example by welding to form a uniform housing 4. The two other edges are produced e.g. by providing the pieces with a perforation or the like to facilitate the bending of the pieces in an angular shape. The sound attenuating piece 5 is connected to the cover 4a or the bottom 4b of the housing. The cover 4a is provided with holes or the like to provide a fastening in the housing 4. The fastening can be made e.g. by screws or corresponding detachable fastening means, wherein the cover 4a and the sound attenuating piece 5 can be detached from the sound trap 1, for example for cleaning of the ventilation ducts 6 and the housing 4 of the sound trap.

The cover 4a of the housing 4 can be made of *e.g.* the same material as the housing 4, or it is also possible to use another material, such as rubber. Figure 7 shows an alternative cover arrangement suitable for the sound trap 1 of Figs. 1 and 2, shown in a reduced cross-sectional view in Fig. 7. In this variant, the cover 4a is made of relatively rigid rubber which is shaped in a kind of U-form in the cross-sectional direction. The sound attenuating piece 5 is placed on the bottom of this U-form, preferably in the central part. In a corresponding manner, the edges of the U-form are slightly elevated from the bottom part, and the outer surfaces of the edges are provided with small flanges 4d or the like. By means of these flanges, the cover 4a remains relatively tightly closed in the housing 4, when the outer diameter of the cover part at the flanges is equal to or slightly greater than the diameter of the inner part of the housing 4 at that edge of the housing 4, which is intended to receive the cover element 4a.

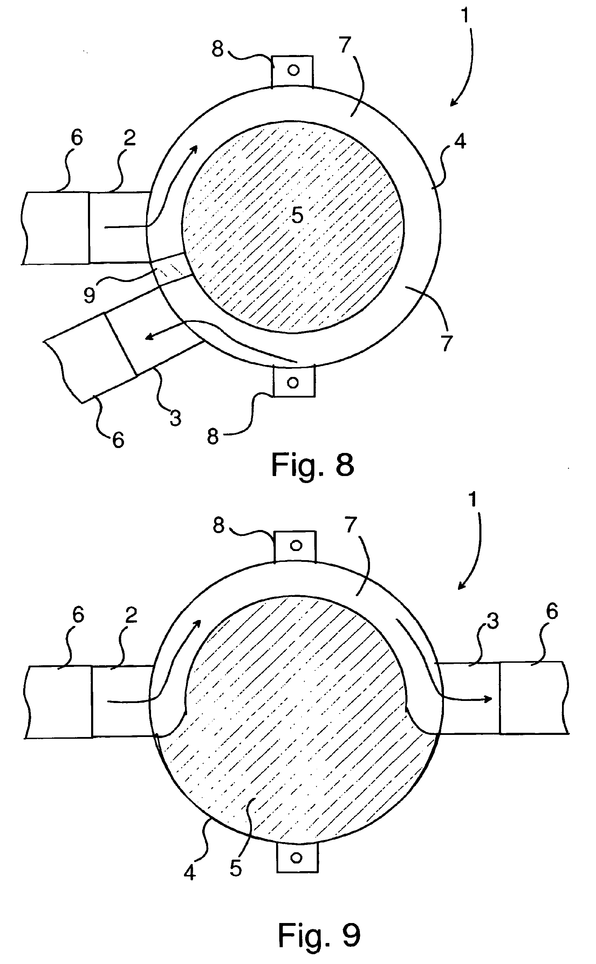

Figure 8 shows one sound trap 1 according to the invention, in which the air flow channel 7 has been extended to the length of almost the whole circumference of the housing. The inlet 2 and the outlet 3 are placed relatively close to each other, and the air flow along a shorter path from the inlet 2 into the outlet 3 is primarily blocked by a wall 9. This wall 9 may comprise, for example, a wall made of the housing material or a wall made of a sound absorbing material, or a combination of these.

Figure 9 shows one sound trap 1 according to the invention, in which the air flows in the air trap in primarily one air flow channel 7. This has been provided preferably by designing the sound attenuating piece 5 in such a way that the sound attenuating piece 5 is partly connected to the wall of the housing so that no air flow takes place through it, at least not to a significant extent. If necessary, the sound attenuating piece can further be designed so that the air flow resistance is reduced. In the arrangement of Fig. 9, the edge of the sound attenuating piece is rounded in the vicinity of the inlet 2 and the outlet 3.

Even though it has been presented above that the sound trap 1 is placed in a suspended ceiling so that the cover element 4a is downwards from the sound trap 1, the sound trap 1 can also be placed in a vertical position, wherein the cover part 4a can be detached from and attached to the sound trap 1 in the lateral direction. In practice, however, the sound trap 1 must usually be placed in the way shown in the figures, because the mounting space in the height direction is relatively small in a suspended ceiling. This space in the height direction may be in the order of 200 mm, wherein the height of the sound trap 1 in this direction should be smaller than this free space in the height direction.

A non-limiting example to be mentioned of the dimensions in practice may be a sound trap 1, in which the diameter of the inlet 2 and the outlet 3 is in the order of 160 mm. In this case, the diameter of the sound attenuating piece 5, seen from above, is preferably greater than 160 mm. In practice, the diameter of the sound attenuating piece 5 may be considerably greater than this, because there may be considerably more mounting space available in this direction than in the height direction. The sound trap according to the invention can also be placed in such ventilation ducts in which the diameter of the ventilation duct 6 is smaller than the diameter of the inlet 2 and/or the outlet 3. In this case, fitting pieces are preferably used, in which the dimensioning of the first end complies with the dimensioning of the ventilation duct and the dimensioning of the second end complies with the dimensioning of the inlet 2 and/or the outlet 3.

As already presented above, the flow control means 11 can be placed in the vicinity of the inlet 2 or the outlet 3. Furthermore, there may be more than one flow control means 11, for example one flow control means 11 in the vicinity of the inlet 2 and one flow control means 11 in the vicinity of each outlet 3. In such a sound trap 1 with more than one flow control means 11, the position of each flow control means 11 can be adjusted either independently from each other or by arranging two or more flow control means 11 in such a way that they are fixed in relation to each other. The independent adjustment can be arranged e.g. by providing the cover element 4a with separate mounting means 12 and a possible groove 13 for each flow control means, or by making the cover element 4a in several parts and providing each separate part of the cover element 4a with a flow control means 11. Thus, these separate cover parts can be moved in relation to each other, which has the result that the flow control means 11 connected to the different parts can be adjusted by changing the position of said cover part in relation to the housing 4.

The cover element 4a of the sound trap 1 according to the invention can be provided with *e.g.* a scale close to the groove 13 or a corresponding point where the flow control means 11 is fixed. Thus, in some cases, the correct control position can be determined by this scale, and a separate measurement is not necessarily required.

In yet another advantageous embodiment of the invention, there is no need for a separate flow control means 11, but the sound attenuating piece 5 can be used as the flow control means. In this case, the mounting of the sound attenuating piece is arranged in such a way that, if necessary, the position of the sound attenuating piece 5 in relation to the inlet 2 and/or outlet 3 can be set so as to achieve substantially the desired flow control effect. In this case, the function of the flow control means 11 is assumed by one or more walls 5b, 5c of the sound attenuating piece 5 in at least partly a transverse direction in relation to the direction of the flow coming in from the inlet 2 or entering the outlet 3. To provide a possibility of selecting the position of the sound attenuating piece 5, the hole 5a through the sound attenuating piece 5 can be made groove-like, wherein the groove shape makes it possible to move the sound attenuating piece 5 in relation to the mounting means 12. Another alternative is to provide the cover element 4a and the bottom element 4b of the housing with a groove, wherein the mounting means 12 can be moved in these grooves to effect the respective movement of the sound attenuating piece 5.

It is obvious that the present invention is not limited solely to the above-presented embodiments but it can be modified within the scope of the appended claims.

## Claims

1. A sound trap (1) which is arranged to be installed in a ventilation duct (6) and which sound trap (1) comprises a housing (4), a sound attenuating piece (5) made of a sound absorbing material, at least one inlet (2) for conveying air into the sound trap (1), at least one outlet (3) for conducting air out of the sound trap (1), and at least one flow channel (7) for conducting air from said at least one inlet (2) to said at least one outlet (3), and said sound attenuating piece (5) is placed between the inlet (2) and the outlet (3) so that a direct air flow from the inlet (2) to the outlet (3) is blocked, wherein air circumvents the sound attenuating piece (5) at least partly, said at least one flow channel (7) is formed in the volume limited by the sound attenuating piece (5) and the housing (4), and the sound trap (1) also comprises at least one flow control means (5, 11) for adjusting the air flow in the flow channel (7) **characterized in that** said at least one flow control means comprises a sheet (11) connected to the housing (4) or the cover element (4a) of the housing, and positioned between the sound attenuating piece (5) and the air inlet (2) and/or the air outlet (3).

2. The air trap (1) according to claim 1, **characterized in that** the direct air flow from the inlet (2) to the outlet (3) is primarily blocked.

3. The sound trap (1) according to claim 1 or 2, **characterized in that** the sound attenuating piece (5) is placed substantially in the centre of the housing (4).

4. The sound trap (1) according to claim 1, 2 or 3, **characterized in that** the shape of the sound attenuating piece (5) in one cross-sectional direction is substantially the same as the shape of the housing (4) in the corresponding cross-sectional direction, and that he dimensions of the sound attenuating piece in one cross-sectional direction are smaller than the inner dimensions of the housing (4) in the corresponding cross-sectional shape.

5. The sound trap (1) according to any of the claims 1 to 4, **characterized in that** the shape of the sound attenuating piece (5) in said one cross-sectional direction is substantially circular.

6. The sound trap (1) according to any of the claims 1 to 4, **characterized in that** the shape of the sound attenuating piece (5) in said one cross-sectional direction is substantially rectangular.

7. The sound trap (1) according to any of the claims 1 to 6, **characterized in that** the height of the sound attenuating piece (5) is substantially the same as the inner height of the housing (4).

8. The sound trap (1) according to claim 7, **characterized in that** the width of the sound attenuating piece (5) is smaller than the inner width of the housing (4).

9. The sound trap (1) according to any of the claims 1 to 8, **characterized in that** between the sound attenuating piece (5) and the wall of the housing, two flow channels (7) are formed from the inlet (2) to the outlet (3), and that the cross-sectional area of said two flow channels (7) in the direction perpendicular to the flow is greater than or equal to the cross-sectional area of the inlet (2) in the direction perpendicular to the flow.

10. The sound trap (1) according to any of the claims 1 to 9, **characterized in that** it comprises one inlet (2) and at least two outlets (3).

11. The sound trap (1) according to any of the claims 1 to 10, **characterized in that** the position of said at least one flow control means (11) in relation to said at least one inlet (2) is changeable.

12. The sound trap (1) according to claim 14, **characterized in that** the mounting point of the sound attenuating piece (5) in relation to the inlet (2) and/or outlet (3) can be selected from at least two different alternatives.

13. The sound trap (1) according to any of the claims 1 to 12, **characterized in that** the housing (4) comprises a cover element (4a).

14. The sound trap (1) according to claim 13, **characterized in that** the cover element (4a) is also arranged to be used as a maintenance hole.

15. The sound trap (1) according to claim 13 or 14, **characterized in that** the sound attenuating piece (5) is placed in connection with the cover element (4a).

## Patentansprüche

1. Schalldämpfer (1), der so angeordnet ist, dass er in einem Belüftungskanal (6) einzubauen ist, und wobei der Schalldämpfer (1) ein Gehäuse (4), ein Schalldämpfstück (5) aus einem schallabsorbierenden Material, mindestens einen Einlass (2) zum Leiten von Luft in den Schalldämpfer (1), mindestens einen Auslass (3) zum Leiten von Luft aus dem Schalldämpfer (1) und mindestens einen Strömungskanal (7) zum Leiten von Luft von dem mindestens einen Einlass (2) zu dem mindestens einen Auslass (3) umfasst, und wobei das Schalldämpfstück (5) so zwischen dem Einlass (2) und dem Auslass (3) angeordnet ist, dass ein direkter Luftstrom vom Einlass (2) zum Auslass (3) blockiert wird, wobei Luft zumindest teilweise das Schalldämpfstück (5) umströmt, wobei der mindestens eine Strömungskanal (7) in dem Raum ausgebildet ist, der durch das Schalldämpfstück (5) und das Gehäuse (4) begrenzt wird, und wobei der Schalldämpfer (1) auch mindestens ein Strömungsregelmittel (5, 11) umfasst, um den Luftstrom im Strömungskanal (7) einzustellen, **dadurch gekennzeichnet, dass** das mindestens eine Strömungsregelmittel eine Platte (11) umfasst, die mit dem Gehäuse (4) oder dem Abdeckelement (4a) des Gehäuses verbunden und zwischen dem Schalldämpfstück (5) und dem Lufteinlass (2) und/oder dem Luftauslass (3) angeordnet ist.

2. Luftschalldämpfer (1) nach Anspruch 1, **dadurch gekennzeichnet, dass** der direkte Luftstrom vom Einlass (2) zum Auslass (3) primär blockiert wird.

3. Schalldämpfer (1) nach Anspruch 1 oder 2, **dadurch gekennzeichnet, dass** das Schalldämpfstück (5) im Wesentlichen in der Mitte des Gehäuses (4) angeordnet ist.

4. Schalldämpfer (1) nach Anspruch 1, 2 oder 3, **dadurch gekennzeichnet, dass** die Form des Schalldämpfstücks (5) in einer Querschnittsrichtung im Wesentlichen die gleiche wie die Form des Gehäuses (4) in der entsprechenden Querschnittsrichtung ist und dass die Maße des Schalldämpfstücks in einer Querschnittsrichtung kleiner als die Innenmaße des Gehäuses (4) in der entsprechenden Querschnittsform sind.

5. Schalldämpfer (1) nach irgendeinem der Ansprüche 1 bis 4, **dadurch gekennzeichnet, dass** die Form des Schalldämpfstücks (5) in der einen Querschnittsrichtung im Wesentlichen kreisförmig ist.

6. Schalldämpfer (1) nach irgendeinem der Ansprüche 1 bis 4, **dadurch gekennzeichnet, dass** die Form des Schalldämpfstücks (5) in der einen Querschnittsrichtung im Wesentlichen rechteckig ist.

7. Schalldämpfer (1) nach irgendeinem der Ansprüche 1 bis 6, **dadurch gekennzeichnet, dass** die Höhe des Schalldämpfstücks (5) im Wesentlichen die gleiche wie die Innenhöhe des Gehäuses (4) ist.

8. Schalldämpfer (1) nach Anspruch 7, **dadurch gekennzeichnet, dass** die Breite des Schalldämpfstücks (5) kleiner als die Innenbreite des Gehäuses (4) ist.

9. Schalldämpfer (1) nach irgendeinem der Ansprüche 1 bis 8, **dadurch gekennzeichnet, dass** zwischen dem Schalldämpfstück (5) und der Wand des Gehäuses zwei Strömungskanäle (7) vom Einlass (2) zum Auslass (3) ausgebildet sind und dass die Querschnittsfläche der zwei Strömungskanäle (7) in der senkrecht zur Strömung verlaufenden Richtung größer als die oder gleich der Querschnittsfläche des Einlasses (2) in der senkrecht zur Strömung verlaufenden Richtung ist.

10. Schalldämpfer (1) nach irgendeinem der Ansprüche 1 bis 9, **dadurch gekennzeichnet, dass** er einen Einlass (2) und mindestens zwei Auslässe (3) umfasst.

11. Schalldämpfer (1) nach irgendeinem der Ansprüche 1 bis 10, **dadurch gekennzeichnet, dass** die Position des mindestens einen Strömungsregelmittels (11) relativ zu dem mindestens einen Einlass (2) veränderbar ist.

12. Schalldämpfer (1) nach Anspruch 14, **dadurch gekennzeichnet, dass** die Einbaustelle des Schalldämpfstücks (5) relativ zum Einlass (2) und/oder Auslass (3) aus mindestens zwei verschiedenen Alternativen ausgewählt werden kann.

13. Schalldämpfer (1) nach irgendeinem der Ansprüche 1 bis 12, **dadurch gekennzeichnet, dass** das Gehäuse (4) ein Abdeckelement (4a) umfasst.

14. Schalldämpfer (1) nach Anspruch 13, **dadurch gekennzeichnet, dass** das Abdeckelement (4a) auch so angeordnet ist, dass es als Wartungsöffnung verwendet wird.

15. Schalldämpfer (1) nach Anspruch 13 oder 14, **dadurch gekennzeichnet, dass** das Schalldämpfstück (5) in Verbindung mit dem Abdeckelement (4a) angeordnet ist.

## Revendications

1. Silencieux (1) qui est agencé pour être installé dans un conduit de ventilation (6) et ledit silencieux (1) comprend un boîtier (4), une pièce atténuant le son (5) faite d'une matière absorbant le son, au moins une admission (2) pour acheminer l'air dans le silencieux (1), au moins une sortie (3) pour conduire l'air à l'extérieur du silencieux (1), et au moins un canal d'écoulement (7) pour conduire l'air depuis ladite au moins une admission (2) vers ladite au moins une sortie (3), et ladite pièce d'atténuation du son (5) est placée entre l'admission (2) et la sortie (3) de sorte qu'un courant d'air direct de l'admission (2) à la sortie (3) est bloqué, dans lequel l'air contourne la pièce atténuant le son (5) au moins partiellement, ledit au moins un canal d'écoulement (7) est formé dans le volume limité par la pièce atténuant le son (5) et le boîtier (4), et le silencieux (1) comprend aussi au moins un moyen de commande d'écoulement (5, 11) pour ajuster l'écoulement d'air dans le canal d'écoulement (7), **caractérisé en ce que** ledit au moins un moyen de commande d'écoulement comprend une feuille (11) raccordée au boîtier (4) ou à l'élément de recouvrement (4a) du boîtier, et positionnée entre la pièce d'atténuation du son (5) et l'admission d'air (2) et/ou la sortie d'air (3).

2. Silencieux (1) selon la revendication 1, **caractérisé en ce que** le courant d'air direct de l'admission (2) à la sortie (3) est essentiellement bloqué.

3. Silencieux (1) selon la revendication 1 ou 2, **caractérisé en ce que** la pièce atténuant le son (5) est placée sensiblement au centre du boîtier (4).

4. Silencieux (1) selon la revendication 1, 2 ou 3, **caractérisé en ce que** la forme de la pièce atténuant le son (5) dans un sens transversal est sensiblement la même que la forme du boîtier (4) dans le sens transversal correspondant, et **en ce que** les dimensions de la pièce atténuant le son dans un sens transversal sont inférieures aux dimensions internes du boîtier (4) dans la forme transversale correspondante.

5. Silencieux (1) selon l'une quelconque des revendications 1 à 4, **caractérisé en ce que** la forme de la pièce atténuant le son (5) dans ledit un sens transversal est sensiblement circulaire.

6. Silencieux (1) selon l'une quelconque des revendications 1 à 4, **caractérisé en ce que** la forme de la pièce atténuant le son (5) dans ledit un sens transversal est sensiblement rectangulaire.

7. Silencieux (1) selon l'une quelconque des revendications 1 à 6, **caractérisé en ce que** la hauteur de la pièce atténuant le son (5) est sensiblement la même que la hauteur interne du boîtier (4).

8. Silencieux (1) selon la revendication 7, **caractérisé en ce que** la largeur de la pièce atténuant le son (5) est inférieure à la largeur interne du boîtier (4).

9. Silencieux (1) selon l'une quelconque des revendications 1 à 8, **caractérisé en ce qu'**entre la pièce atténuant le son (5) et la paroi du boîtier, deux canaux d'écoulement (7) sont formés depuis l'admission (2) vers la sortie (3), et **en ce que** la zone transversale desdits deux canaux d'écoulement (7) dans le sens perpendiculaire à l'écoulement est plus grande ou égale à la zone transversale de l'admission (2) dans le sens perpendiculaire à l'écoulement.

10. Silencieux (1) selon l'une quelconque des revendications 1 à 9, **caractérisé en ce qu'**il comprend une admission (2) et au moins deux sorties (3).

11. Silencieux (1) selon l'une quelconque des revendications 1 à 10, **caractérisé en ce que** la position dudit au moins un moyen de commande d'écoulement (11) par rapport à ladite au moins une admission (2) est modifiable.

12. Silencieux (1) selon la revendication 14, **caractérisé en ce que** le point de montage de la pièce d'atténuation du son (5) par rapport à l'admission (2) et/ou à la sortie (3) peut être choisi parmi au moins deux solutions différentes.

13. Silencieux (1) selon l'une quelconque des revendications 1 à 12, **caractérisé en ce que** le boîtier (4) comprend un élément de recouvrement (4a).

14. Silencieux (1) selon la revendication 13, **caractérisé en ce que** l'élément de recouvrement (4a) est également agencé pour être utilisé comme trou de maintenance.

15. Silencieux (1) selon la revendication 13 ou 14, **caractérisé en ce que** la pièce d'atténuation du son (5) est placée en raccordement avec l'élément de recouvrement (4a).
